# FASCICULE DE BREVET EUROPEEN

(11) **EP 3 130 020 B1**
(45) Date de publication et mention de la délivrance du brevet: **27.10.2021**
(21) Numéro de dépôt: 15725876.5
(22) Date de dépôt: 08.04.2015
(51) Int. Cl.: H01M 50/543, H01M 50/538, H01M 50/566, H01M 10/052, H01M 50/562

(54) **ACCUMULATEUR ELECTROCHIMIQUE AU LITHIUM AVEC BORNE EN LIAISON DIRECTE AVEC LE FAISCEAU ELECTROCHIMIQUE ET PROCEDES DE REALISATION ASSOCIES**
ELEKTROCHEMISCHER LITHIUM-IONEN-AKKU MIT DIREKT AN DIE ELEKTRODENANORDNUNG ANGESCHLOSSENEM ANSCHLUSS UND ZUGEHÖRIGES HERSTELLUNGSVERFAHREN
LITHIUM-ION ELECTROCHEMICAL ACCUMULATOR HAVING A TERMINAL DIRECTLY CONNECTED TO THE ELECTRODE ASSEMBLY AND ASSOCIATED PRODUCTION METHODS

(30) Priorité: 08.04.2014 FR 1453088
(43) Date de publication de la demande: 15.02.2017
(73) Titulaire: Commissariat à l'Énergie Atomique et aux Énergies Alternatives, 75015 Paris (FR)
(72) Inventeur: DEWULF, Frédéric, F-38500 Voiron (FR); CHAMI, Marianne, F-38600 Fontaine (FR)
(74) Mandataire: Nony
(86) Numéro de dépôt international: PCT/IB2015/052532
(87) Numéro de publication internationale: WO 2015/155698

(56) Documents cités:
- EP-A1- 1 898 481
- EP-A2- 2 337 137
- FR-A1- 2 798 227
- FR-A1- 2 989 836
- None

## Description

### Domaine technique

La présente invention concerne le domaine des générateurs électrochimiques au lithium, qui fonctionnent selon le principe d'insertion ou de désinsertion, ou autrement dit intercalation-désintercalation, de lithium dans au moins une électrode.

L'invention se rapporte notamment aux accumulateurs électrochimiques au lithium-ion (Li-ion) de forte capacité, typiquement supérieur à 10 Ampère-heure (Ah), et présentant une aptitude au passage de forts courants, typiquement supérieurs à 250 A.

Elle concerne plus particulièrement un accumulateur électrochimique au lithium comportant au moins une cellule électrochimique constituée d'une anode et d'une cathode de part et d'autre d'un séparateur imprégné d'électrolyte, deux collecteurs de courant dont un est relié à l'anode et l'autre à la cathode, et un boitier de forme allongée selon un axe longitudinal, le boitier étant agencé pour loger la cellule électrochimique avec étanchéité, et dont l'une des bornes traverse une paroi de l'accumulateur de façon à être raccordée électriquement avec une électrode du faisceau électrochimique selon la revendication 1.

Le boitier peut comporter un couvercle et un conteneur, usuellement appelé godet, ou comporter un couvercle, un fond et une enveloppe latérale assemblée à la fois au fond et au couvercle.

L'invention vise à améliorer la densité énergétique, la résistance mécanique et à simplifier la réalisation d'un tel accumulateur, tout en lui assurant une étanchéité, et une intensité de courant de sortie optimales.

### Art antérieur

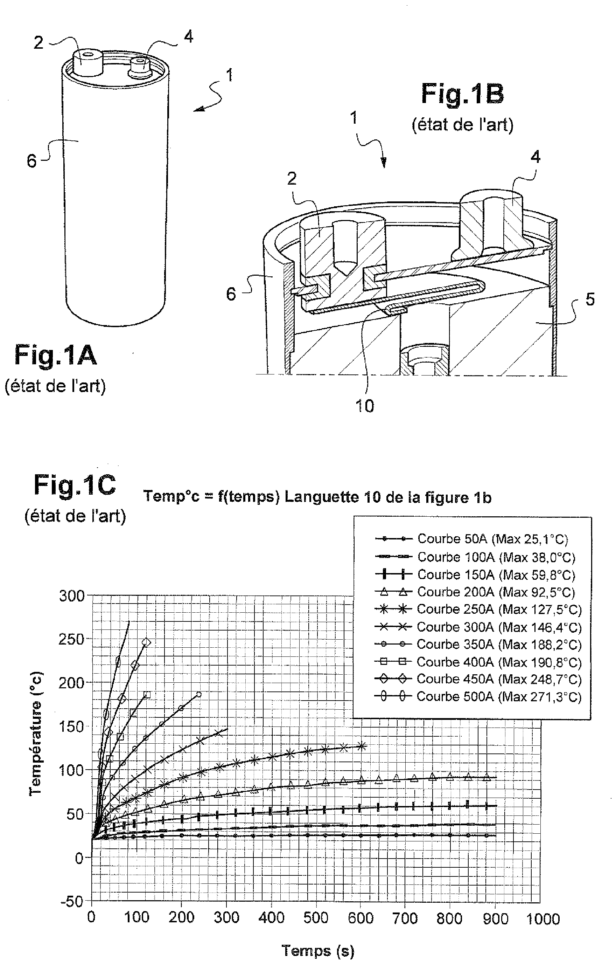

Tel qu'illustré schématiquement en figures 1A et 1B, une batterie ou accumulateur lithium-ion 1 comporte usuellement au moins une cellule électrochimique constituée d'un séparateur imprégné d'un constituant électrolyte entre une électrode positive ou cathode et une électrode négative ou anode, un collecteur de courant connecté à la cathode, un collecteur de courant connecté à l' anode et enfin, un emballage 6 agencé pour contenir la(les) cellule(s) électrochimique avec étanchéité tout en étant traversé par une partie des collecteurs de courant 2, 4 formant les deux bornes de sortie du courant.

L'architecture des batteries lithium-ion conventionnelles est une architecture que l'on peut qualifier de monopolaire, car avec une seule cellule électrochimique définissant un faisceau électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet

US 2006/0121348,
- une géométrie prismatique, avec enroulement autour d'un axe prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme LiFePO₄, LiCoO₂, LiNi_{0.33} Mn_{0.33} Co_{0.33}O₂, déposés sur un feuillard en matériau métallique tel que l'aluminium, appelé collecteur de courant.

L'électrode négative ou anode est très souvent constituée de carbone graphite ou en LiaTiO₅O₁₂ (matériau titanate), éventuellement également à base de silicium ou de composite formé à base de silicium déposé sur un feuillard en matériau métallique, en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Une batterie ou accumulateur Li-ion comporte un emballage rigide lorsque les applications visées sont exigeantes où l'on cherche une longue durée de vie, typiquement supérieure à 10 ans avec par exemple des pressions à supporter pour le boitier (vide ou surpression élevée) bien supérieures et un niveau d'étanchéité requis plus strict, typiquement inférieure à 10⁻⁸ mbar.l/s, ou dans des milieux à fortes contraintes comme le domaine naval, aéronautique ou spatial.

Aussi, à ce jour un emballage rigide est constitué d'un boitier métallique, typiquement en acier inoxydable (inox 316L ou inox 304), en aluminium (Al 1050 ou Al 3003) ou en titane.

Actuellement, deux types de boîtier rigide, comme celui référencé 6 représenté en figure 1A, sont fabriqués.

Le premier type consiste en un boîtier rigide constitué avec un fond usiné, une enveloppe latérale et un couvercle soudés entre eux sur leur périphérie par laser.

Le deuxième type consiste également en un boitier rigide constitué avec un godet embouti et un couvercle soudés entre eux sur leur périphérie par laser.

Comme illustré en figure 1B, une des bornes de sortie 2, en général la borne négative 2, traverse le boîtier 6 de manière isolée électriquement et est raccordée électriquement à une électrode de même polarité du faisceau électrochimique 5 au moyen d'une collecteur de courant intermédiaire, sous la forme d'une languette plane 10 repliée sur elle-même. L'autre des bornes de sortie 4, en général le borne positive 4, est quant à elle soudée à une paroi du boîtier 6 lui-même raccordé électriquement à l'électrode du faisceau électrochimique 5 de polarité opposée à celle de la borne 2. La traversée formant la borne 2 doit être parfaitement étanche pour éviter toute fuite de l'électrolyte hors du boîtier 6.

La demande de brevet FR 2989836 A1, au nom du demandeur, divulgue plus précisément une telle traversée étanche de boîtier d'accumulateur lithium ion.

Les demandes de brevet FR 2 853 764 et EP 1 653 530 A1 divulguent également un accumulateur lithium-ion comme celui représenté en figure 1B, c'est-à-dire avec une traversée étanche du couvercle de boitier formant une borne et un raccordement entre ladite borne négative et le faisceau électrochimique au moyen d'une pièce intermédiaire sous la forme d'une languette plane repliée sur elle-même. Plus précisément, la borne traversante est la borne négative et elle est soudée à une extrémité de la languette plane dont l'autre extrémité est soudée aux bandes non revêtues d'un feuillard en cuivre ou cuivre nickelé support de l'anode.

Cette solution de raccordement électrique au moyen d'une languette présente des inconvénients.

Tout d'abord, la languette repliée sur elle-même occupe une hauteur et donc un volume, non négligeable dans le boîtier selon l'axe de l'accumulateur. Ce volume conséquent occupé par la languette diminue le volume intérieur au boitier qui peut être occupé par le faisceau électrochimique, ce qui diminue la densité énergétique de l'accumulateur. De plus, les inventeurs ont réalisé des essais d'échauffement sur une languette 10 telle qu'illustrée en figure 1B. Les résultats de ces essais à différentes valeurs de courant sont montrés sous forme de courbes en figure 1C. On précise que les mesures de température ont toutes été enregistrées au centre d'une languette en cuivre dont la section de passage de courant était égale à 7mm². De ces courbes, les inventeurs en ont déduit qu'une telle languette 10 était sujette à des augmentations de températures par effet Joule, d'autant plus fortes que la valeur du courant qui la traverse est élevée. Au-delà de 250-300A, l'élévation de température subie par la languette apparaît comme rédhibitoire. Les conséquences d'une élévation de température trop importante de la languette peuvent être désastreuses pour l'intégrité de l'accumulateur. Ainsi, il peut se produire une fonte du séparateur à l'extrémité du faisceau électrochimique. Il peut également se produire un échauffement de l'électrolyte, la montée en température provoquant une augmentation de volume avec augmentation de la pression interne de l'accumulateur.

La demande de brevet EP1898481 divulgue une solution de liaison sans soudure entre le faisceau électrochimique et la borne de sortie de courant d'un accumulateur Li-ion.

Il existe donc un besoin d'améliorer la liaison électrique entre la borne traversant une paroi d'un accumulateur au lithium et son faisceau électrochimique, notamment afin d'augmenter la densité d'énergie volumique d'un accumulateur électrochimique au lithium et de limiter l'échauffement par effet Joule des parties internes au boitier, plus particulièrement pour des valeurs élevées de courant de l'accumulateur.

### Exposé de l'invention

Pour ce faire, l'invention concerne, sous l'un de ses aspects, un accumulateur électrochimique au lithium comportant:
- au moins une cellule électrochimique constituée d'au moins une anode et une cathode de part et d'autre d'un électrolyte imprégné dans un séparateur, la(les) cellule(s) définissant un faisceau électrochimique de forme allongée selon un axe longitudinal avec à l'une de ses extrémités latérales, des bandes de l'anode non revêtues et à l'autre de ses extrémités latérales des bandes de la cathode non revêtues; au moins une partie des bandes non revêtues de l'anode ou de la cathode du faisceau électrochimique étant tassée en formant un socle;
- un boîtier agencé pour contenir de manière étanche le faisceau électrochimique,
- deux bornes de sortie courant reliées chacune à l'une ou l'autre de l'(des) anode(s) et de la(des) cathode(s), une des bornes dite première borne traversant une paroi du boîtier et étant isolée électriquement de celui-ci.

Selon l'invention, la première borne comporte une première pièce conductrice, la première pièce traversant le boîtier et comportant une portion dont au moins une zone est directement soudée sur le socle.

Par « bandes non revêtues », on entend ici et dans le cadre de l'invention, les portions des feuilles métalliques, aussi appelés feuillards, formant les collecteurs de courant, qui ne sont pas recouvertes d'un matériau d'insertion au lithium. Dans la suite du texte, on emploiera indifféremment le terme « bande non revêtue » ou « rive » pour désigner une portion d'électrode au sens de la définition ci-dessus.

Par « socle », on entend la structure obtenue par tassement des bandes non revêtues.

Par « tassement », on entend une compression selon l'axe du faisceau électrochimique d'au moins une partie des rives de manière à réaliser une structure dont la surface est sensiblement plane, dite socle, pour recevoir la soudure directe de la borne à sa surface. Le tassage axial peut être réalisé à une ou plusieurs reprises. Il peut consister en une compression suivant un ou plusieurs mouvements relatifs de va et vient, i.e. au moins un aller-retour selon l'axe du faisceau électrochimique, et ce jusqu'à atteindre soit une dimension voulue de faisceau électrochimique suivant l'axe, soit un effort maximal de compression dont la valeur est prédéterminée au préalable. Le tassement de la partie des rives peut être réalisé comme décrit et revendiqué dans la demande de brevet déposée en France par le demandeur le 25 septembre 2013 sous le n° 13 59223.

Grâce à l'invention, on s'affranchit d'une pièce intermédiaire de raccordement électrique entre la borne traversante et le faisceau électrochimique d'un accumulateur, telle que la languette selon l'état de l'art. Ainsi, on supprime les inconvénients liés à cette pièce intermédiaire. Tout d'abord, du fait de la suppression de cette pièce intermédiaire, on o obtient un gain de volume disponible à l'intérieur du boîtier de l'accumulateur, et donc, par-là, on augmente la densité d'énergie volume d'un accumulateur selon l'invention comparativement à ceux selon l'état de l'art. Ensuite, on limite considérablement les échauffements par effet Joule des parties internes au boitier puisque on supprime ceux subis par les pièces intermédiaires selon l'état de l'art, ce qui est d'autant plus avantageux pour des valeurs élevées de courant de l'accumulateur.

De préférence, la deuxième borne est soudée au boîtier.

Selon un mode de réalisation avantageux, la première borne comporte une deuxième pièce conductrice de type femelle, la première pièce étant de type mâle. L'accumulateur comporte également deux joints électriquement isolants sous la forme de rondelles, comportant chacune une portion d'appui en appui surfacique avec pression contre l'une des faces de la paroi du boitier et une portion de guidage en saillie par rapport à la portion d'appui, la portion de guidage étant en appui avec pression contre le bord de l'orifice traversant de la paroi.

La pièce mâle est ajustée serrée dans la pièce femelle, et chacune des pièces conductrices comporte une portion d'appui en appui surfacique avec pression contre une portion d'appui des rondelles. Selon ce mode de réalisation, la pièce femelle est en outre en appui surfacique avec pression contre les portions de guidage des rondelles. Le fait que la pièce mâle soit ajustée serrée dans la pièce femelle avec un appui en pression des pièces et des rondelles les unes contre les autres permet d'obtenir une étanchéité parfaite par la traversée de paroi formant la borne.

De préférence, les pièces mâle et femelle sont soudées entre elles par un cordon de soudure continu. Un tel mode est avantageux car il permet de renforcer définitivement la liaison mécanique entre la pièce mâle et la pièce femelle. En outre, un cordon continu de soudure est parfaitement étanche et vient compléter et garantir la parfaite étanchéité de la traversée de paroi, et ce pendant toute la durée d'utilisation d'un accumulateur Li-ion. Outre l'étanchéité, la soudure vient garantir la cohésion mécanique au regard des dilatations thermiques provoqués par le chauffage de la borne sous l'effet de fort courants électriques.

Selon une variante de réalisation, la portion de la première pièce comporte une zone de moindre épaisseur, et la portion est soudée au socle à l'endroit d'une zone de moindre épaisseur, cette zone étant d'une épaisseur e de préférence comprise entre 0,1 et 0,8mm, et de largeur 1 de préférence comprise entre 0,3 et 2mm.

Selon une autre variante de réalisation, la zone de moindre épaisseur est une zone périphérique extérieure de la première pièce.

De manière alternative, selon une autre variante, la zone de moindre épaisseur est une gorge périphérique de forme annulaire.

De préférence, la borne est soudée sur le socle par transparence laser.

Selon un mode de réalisation préféré, les bornes sont en cuivre ou en cuivre nickelé.

Selon une variante de réalisation, les bandes non revêtues d'une même électrode sont reliées entre elles par au moins une soudure radiale à l'axe du faisceau.

Selon un mode de réalisation avantageux, le faisceau électrochimique est obtenu par enroulement, et la première borne est soudée sur l'axe d'enroulement du faisceau électrochimique.

Selon une variante de réalisation, le faisceau électrochimique est obtenu par enroulement, et la borne est soudée à mi-distance entre l'axe d'enroulement du faisceau électrochimique et la périphérie extérieure du faisceau électrochimique.

Selon une variante de réalisation, l'accumulateur est de forme générale cylindrique.

Selon une autre variante de réalisation, l'accumulateur est de forme générale prismatique.

De préférence, les matériaux et les dimensions des différentes pièces sont choisis pour permettre le passage d'un courant d'intensité égale ou supérieure à 250A.

L'invention concerne également un procédé de réalisation d'un accumulateur électrochimique tel que décrit ci-dessus, selon lequel on réalise les étapes suivantes:
a. tassement axial selon l'axe du faisceau électrochimique (5) d'au moins une partie des bandes non revêtues d'une même électrode du faisceau électrochimique pour créer le socle,
b. positionnement de la première pièce conductrice de la première borne directement sur le socle,
c. soudage de la première pièce directement au socle.

Selon une variante de réalisation, le procédé peut de plus comprendre les étapes suivantes :
d. positionnement de deux joints isolants électriquement sous la forme de rondelles de part et d'autre d'un orifice traversant de la paroi du boitier,
e. positionnement de la deuxième pièce de la première borne au travers des orifices des rondelles et de l'orifice traversant de la paroi du boitier,
f. emmanchement en force de l'ensemble constitué par la paroi, la deuxième pièce et les rondelles sur la première pièce.
g. sertissage de la première borne par appui surfacique sur la surface supérieure de la deuxième pièce jusqu'à obtenir l'alignement de cette surface supérieure avec la surface supérieure de la première pièce traversant le boîtier et la mise en compression axiale et radiale des rondelles,
h. réalisation d'un cordon de soudure continu entre la première pièce et la deuxième pièce.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1A est une vue en perspective d'un accumulateur lithium-ion selon l'état de l'art,
- la figure 1B est une vue en coupe axiale d'un accumulateur lithium-ion selon l'état de l'art,
- la figure 1C représente les courbes d'augmentation de la température en fonction du courant d'un collecteur de courant sous forme d'une languette reliant la borne traversant le boîtier à une polarité du faisceau électrochimique d'un accumulateur lithium-ion selon l'état de l'art,
- la figure 2A est une vue en coupe axiale rapprochée de la borne traversant le boîtier et du faisceau électrochimique d'un accumulateur lithium-ion selon un mode de réalisation de l'invention,
- la figure 2B est une vue de détail de la figure 2A,
- la figure 3A est une vue latérale de détail exemple selon l'invention de zone de moindre épaisseur de la borne traversant le boîtier,
- la figure 3B est une variante selon l'invention de zone de moindre épaisseur de la borne traversant une paroi du boîtier,
- la figure 4A est une vue de dessus du faisceau électrochimique selon un mode de réalisation de l'invention,
- la figure 4B est une vue de dessus du faisceau électrochimique selon une variante de réalisation, la borne étant placée sur l'axe de l'enroulement du faisceau,
- la figure 5 est une vue latérale d'un exemple d'accumulateur électrochimique selon l'invention,
- les figures 6A et 6B sont des vues en coupe axiale au niveau d'une borne traversant le boitier d'un accumulateur respectivement selon l'état de l'art et selon l'invention, illustrant le de gain de volume à l'intérieur du boitier, procuré par l'invention,
- la figure 7 est une vue en coupe axiale au niveau d'une borne traversant le boitier d'un accumulateur selon l'invention, illustrant le trajet d'un courant électrique de forte intensité,
- les figures 8A à 8C sont des vues de côté d'un accumulateur lithium-ion avec un boitier de forme cylindrique illustrant différentes variantes d'agencement d'une borne selon l'invention traversant le couvercle de boitier et une borne soudée au couvercle de boitier;
   - - les figures 9A à 9C sont similaire aux figures 8A à 8C mais avec un boitier de forme prismatique.

Les figures 1A, 1B et 1C sont relatives à des accumulateurs électrochimiques avec une borne traversant une paroi de l'accumulateur selon l'état de l'art. Ces figures ont déjà été citées en préambule et ne le seront donc plus ci-après.

Dans l'ensemble de la présente demande, les termes «inférieur», «supérieur», «bas», «haut», «dessous» et «dessus» sont à comprendre par référence par rapport à un boitier d'accumulateur Li-ion positionné à la verticale avec son couvercle sur le dessus et la traversée faisant saillie à l'extérieur du boitier vers le haut.

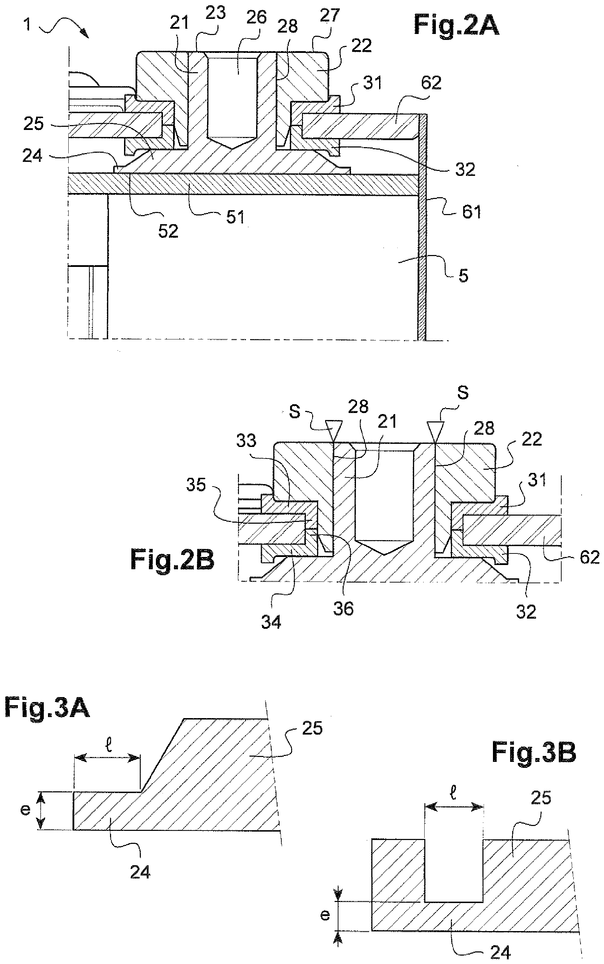

On a représenté en figures 2A et 2B, un exemple de borne 2 de sortie du courant traversant une paroi du boîtier 6 d'un accumulateur 1 Li-ion selon l'invention. Dans l'exemple illustré, la borne 2 traverse couvercle 62 du boîtier 6 en étant isolé électriquement de celui-ci. La borne 2 peut tout autant traverser une autre paroi du boîtier 6, en étant isolée électriquement de celle-ci.

La borne 2 comporte deux pièces conductrices, une première pièce, de type mâle 21, et une deuxième pièce conductrice, de type femelle 22. La pièce mâle 21 qui s'étend depuis l'intérieur du boitier 6 est emmanchée avec ajustement serré dans la pièce femelle 22 qui s'étend depuis l'extérieur du boitier 6.

La surface 23 supérieure de la pièce mâle 21, externe au boîtier 6, est dans un même plan que de la pièce mâle et la surface 27 de la pièce femelle 22, externe au boîtier 6. Les deux pièces conductrices 21, 22 sont isolées du couvercle 62 électriquement par deux rondelles 31 et 32, en matériau isolant électrique possédant par ailleurs des propriétés de résistance mécanique adaptées à leur mise en compression, par exemple du polyétherimide (PEI).

Les deux rondelles 31, 32 sont logées dans l'orifice traversant du couvercle 62, la rondelle 31 étant en appui contre la face de-dessus du couvercle 62 tandis que la rondelle 32 est en appui contre la face du dessous du couvercle 62. Plus précisément, la pièce mâle 21 est en appui avec pression axiale selon l'axe longitudinal de la borne 2, contre la partie 34 de la rondelle 32 elle-même en appui avec pression axiale contre le couvercle 62. De même, la pièce femelle 22 est en appui avec pression axiale contre la partie 33 de la rondelle 31 elle-même en appui avec pression axiale contre le couvercle 62. Les parties de guidage 35, 36 des rondelles 31, 32 sont quant à elles en appui avec pression radiale contre le bord de l'orifice traversant du couvercle 62. Les appuis avec pression axiale et radiale des rondelles 31, 32 contre le couvercle 62 garantissent l'étanchéité du boîtier 6 au niveau de la borne 2.

Comme représenté en figure 2B, un cordon de soudure 28 est réalisé entre la pièce mâle 21 et la pièce femelle 22. Le cordon de soudure 28 permet de renforcer définitivement la liaison mécanique entre l'extrémité de la pièce mâle 21 et la base de la pièce femelle 22. En outre, un cordon continu de soudure est parfaitement étanche et vient compléter et garantir la parfaite étanchéité de la traversée de paroi selon l'invention, et ce pendant toute la durée d'utilisation d'un accumulateur Li-ion. Outre l'étanchéité, la soudure vient garantir la cohésion mécanique au regard des dilatations thermiques provoqués par le chauffage de la borne 2 sous l'effet de fort courant.

La pièce mâle 21 comporte une portion 25 agencée à l'intérieur du boîtier 6. Cette portion 25 comporte une zone de moindre épaisseur 24 d'épaisseur e et de largeur 1. Selon une première variante illustrée en figure 3A, cette zone 24 est une zone périphérique extérieure de la pièce mâle 21. Selon une deuxième variante illustrée en figure 3B, cette zone 24 est une gorge périphérique de forme annulaire. Comme détaillé par la suite, cette zone de moindre épaisseur 24 permet un soudage laser de la pièce mâle 21 directement sur le faisceau électrochimique 5 selon l'invention. L'épaisseur e est de préférence comprise entre 0,1 et 0,8mm, et la largeur 1 est de préférence comprise entre 0,3 et 2mm.

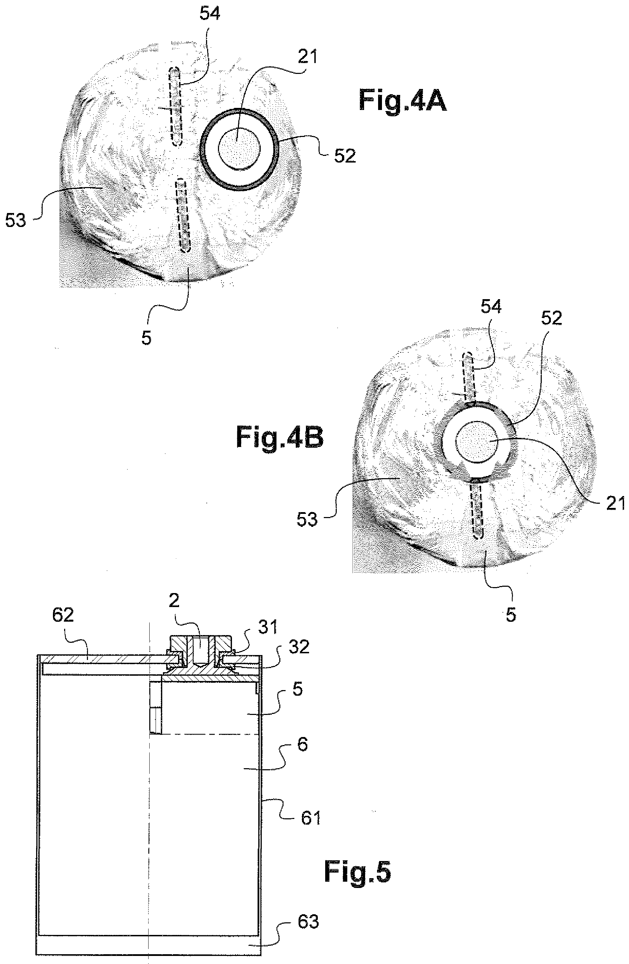

Le faisceau électrochimique 5 de l'accumulateur 1 est enroulé et obtenu tel que décrit et revendiqué dans la demande de brevet déposée en France par le demandeur le 25 septembre 2013 sous le n° 13 59223. Tel qu'illustrée en figures 4A et 4B, le faisceau 5 comporte ainsi des rives 53 d'une même électrode dont une partie est tassée en formant un socle 51. Les rives 53 d'une même électrode sont par ailleurs soudées entre elles par une soudure 54, dans une zone où elles ont été préalablement rabattues en étant déformées plastiquement, selon une direction radiale à l'axe d'enroulement du faisceau 5. Cette soudure 54 permet d'améliorer le passage du courant.

Selon l'invention, la zone de moindre épaisseur est soudée sur toute sa périphérie directement au socle 51 selon au moins une ligne de soudure 52. Cette soudure 52 est telle que la résistance électrique de la liaison entre faisceau électrochimique 5 et la pièce mâle 21 ne dépasse pas 50µOhms. Cette soudure 52 peut être continue selon une seule ligne comme représenté en figure 4A, ou discontinue, avec par exemple deux arcs de cercle d'angle compris entre 120 et 150° comme représenté en figure 4B.

La borne 2 peut être agencée sur l'axe d'enroulement du faisceau électrochimique 5 comme représenté en figure 4B ou, entre l'axe d'enroulement du faisceau électrochimique 5 et sa périphérie comme représenté en figure 4A.

Ainsi, selon l'invention, la borne 2 est en liaison directe avec une électrode du faisceau électrochimique 5 puisque soudée directement sur le socle 51.

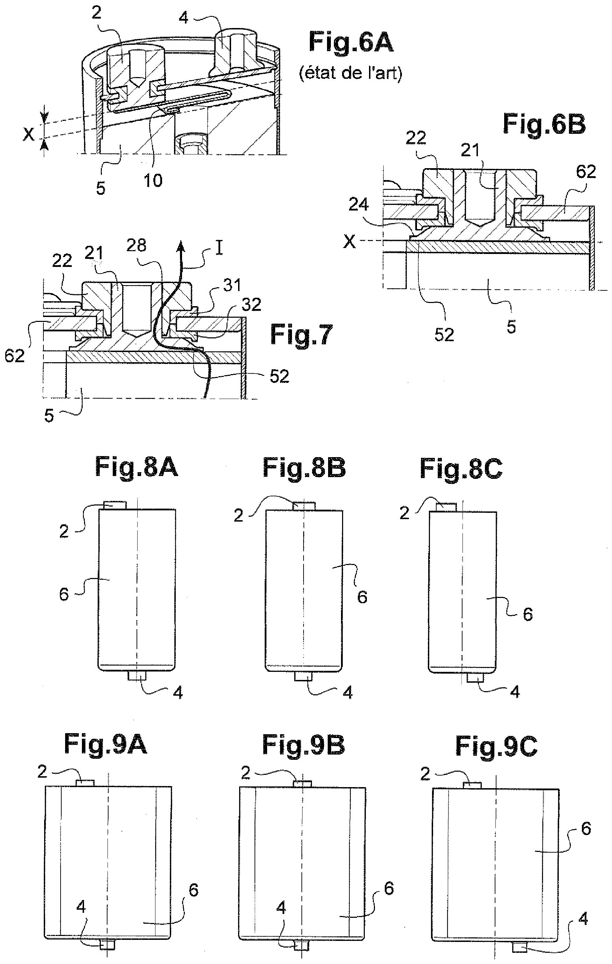

La solution selon l'invention avec une borne 2 soudée directement sur le faisceau électrochimique 5 présente plusieurs avantages en plus de l'étanchéité déjà décrite, que l'on peut énumérer comme suit :
- une mise en butée en translation du faisceau électrochimique à l'intérieur du boîtier, ce qui permet de solutionner la problématique habituellement rencontrée de déplacement du faisceau électrochimique lorsque l'accumulateur est soumis à des vibrations ou chocs mécaniques selon son axe longitudinal. Ces vibrations et chocs mécaniques sont par exemple ceux des cycles décrits par la norme des nations unies sur les recommandations relatives au transport des matières dangereuses et plus spécifiquement les batteries au lithium (tests décrits dans le manuel d'épreuves et de critères - Section 38.3 intitulée «piles au lithium métal et piles au lithium ionique ».
   - - une résistance mécanique en rotation accrue de la borne traversante à un couple de serrage important, typiquement supérieur à 4N.m, comparativement aux bornes selon l'état de l'art. Ce couple de serrage important peut être subi par exemple au moment de l'assemblage des accumulateurs en module batterie par l'intermédiaire de barrettes en cuivre ou de busbars.
- un gain en densité d'énergie volumique (Wh/l) d'un accumulateur Li-ion. En effet, la borne 2 soudée directement sur le faisceau électrochimique 5 permet d'obtenir un gain de volume entre ce dernier et la paroi du boitier 6 comparativement aux solutions de raccordement électrique selon l'état de l'art. Cet avantage est illustré en figures 6A et 6B. Comme illustré en figure 6A, un raccordement électrique selon l'état de l'art, entre un faisceau électrochimique 5 et une borne 2 au moyen d'un collecteur de courant supplémentaire sous la forme d'une languette 10 repliée sur elle-même, implique une hauteur X occupée par cette dernière d'une valeur comprise entre 1 et 5 mm. Comme illustré en figure 6B, un raccordement électrique par soudure directe de la borne 2 au faisceau électrochimique 5 selon l'invention permet de supprimer la hauteur de languette 10, c'est-à-dire d'avoir une valeur X nulle comme symbolisé par la ligne en pointillés. Le gain de volume avec la solution selon l'invention peut ainsi représenter jusqu'à 10% de gain en énergie volumique dans un accumulateur Li-ion, en fonction de ses formats.

- une diminution des échauffements en interne de l'accumulateur selon l'invention. En effet, le fait de supprimer un collecteur de courant supplémentaire selon l'état de l'art, comme la languette 10, permet également de limiter les échauffements internes à l'accumulateur qui sont habituellement constatés lors du passage de forts courants, typiquement supérieurs à 250A.

On veille à dimensionner convenablement les sections de passages de courant d'une part dans la soudure 52 entre la pièce mâle 21 et le socle 51 du faisceau électrochimique 5 et d'autre part à l'interface 28 entre la pièce male et la pièce femelle, afin de pouvoir appliquer l'invention aux accumulateurs de puissance (régime de charge et décharge de 10C à 50C), et de haute puissance (régime de décharge > 50C), afin de pouvoir faire passer des courants d'une intensité supérieure à 500A. La flèche I représente sur la figure 7 le passage du courant à travers la soudure 52 et l'interface 28. Comme représenté en figure 5, le couvercle 62 à travers laquelle passe la borne 2 fait partie intégrante d'un conteneur à enveloppe latérale 61. Le boîtier de l'accumulateur 6 est fermé complètement de manière étanche par un fond une paroi de fond 63 rapportée sur le conteneur 61, 62 et soudée à ce dernier au conteneur. La soudure entre la paroi de fond 63 et l'enveloppe latérale 61 du conteneur peut être réalisée par soudage laser.

L'autre borne 4 de sortie du courant de l'accumulateur, qui n'est pas traversante, est raccordée à la fois à une paroi du boîtier 6, telle que le couvercle 62, par exemple par soudage, et aux rives de l'autre électrode du faisceau électrochimique 5, non représentées.

Plusieurs types de configuration peuvent être adoptés pour un accumulateur selon l'invention pour le positionnement des bornes 2 et 4 :
- borne 4 supportée par le fond de boitier 6 et borne 2 traversante selon l'invention supportée par le couvercle de boitier 6 de forme cylindrique, avec la borne 2 décalée latéralement par rapport à l'axe du boitier 6 et la borne 4 dans l'axe X du boitier 6 (figure 8A), ou les deux bornes 2, 4 dans l'axe du boitier 6 (figure 8B), ou les deux bornes 2, 4 décalées latéralement de l'axe du boitier 6 (figure 8C) ;
- borne 4 supportée par le fond de boitier 6 et borne 2 traversante selon l'invention supportée par le couvercle 62 de boitier 6 de forme prismatique, avec la borne négative 2 décalée latéralement par rapport à l'axe du boitier 6 et la borne 4 dans l'axe du boitier 6 (figure 9A), ou les deux bornes 2, 4 dans l'axe du boitier (figure 9B), ou les deux bornes 2, 4 décalées latéralement de l'axe du boitier (figure 8C).

Pour réaliser un accumulateur Li-ion selon l'invention tel que représenté en figure 5, on réalise les étapes suivantes:
a. tassement axial selon l'axe d'enroulement du faisceau électrochimique 5 d'au moins une partie des rives 53 d'une même électrode pour créer le socle 51, et éventuellement soudure des rives entre elles selon au moins une soudure 54 radiale,
b. positionnement de la pièce mâle 21 de la borne 2 directement sur le socle 51, selon la de position décrite précédemment et illustrée en figure 4A,
c. soudage laser de la pièce mâle 21 directement au socle 51 au niveau de la zone de moindre épaisseur 24, pour former la soudure 52,,
d. positionnement des deux rondelles isolants électriquement 31,32 de part et d'autre d'un orifice traversant de la paroi 62 de dessus du boitier 6,
e. positionnement de la pièce femelle 22 au travers des orifices des rondelles 31, 32 et de l'orifice traversant de la paroi 62,
f. emmanchement en force de l'ensemble constitué par la paroi 62, la pièce femelle 22 et les rondelles 31, 32sur la pièce mâle 21.
g. sertissage de la borne 2 par appui surfacique sur la surface supérieure 27 de la pièce femelle 22 jusqu'à obtenir l'alignement de cette surface supérieure 27 avec la surface supérieure 23 de la pièce mâle 21 et la mise en compression axiale et radiale des rondelles 31, 32,
h. réalisation d'un cordon de soudure continu 28 par un soudage S à l'interface 28 entre la pièce mâle 21 et la pièce femelle 22. Ce soudage S peut être un soudage laser, ultrason ou autre moyen de soudure.

L'invention n'est pas limitée aux exemples qui viennent d'être décrits ; on peut notamment combiner entre elles des caractéristiques des exemples illustrés au sein de variantes non illustrées.

D'autres variantes et améliorations de l'invention peuvent être prévues sans pour autant sortir du cadre de l'invention.

Ainsi, si dans les exemples illustrés, la borne 2 traversante est, de préférence avec un boitier en aluminium, une borne de sortie du courant négative, elle peut être également une borne positive.

Par ailleurs, si dans les exemples illustrés la borne 2 traverse le couvercle 62 du boitier 6, elle peut également traverser toute autre paroi du boitier comme le fond 63.

Le faisceau électrochimique peut être tassé sur toute sa surface de rives.

On peut prévoir de ne pas avoir de ligne de soudure entre rives d'une même électrode.

Enfin, si dans les exemples illustrés, l'agencement de la pièce mâle 21 dans la pièce femelle 22 est tel que leurs extrémités définissent une surface plane, c'est-à-dire avec une différence de hauteur entre elles sensiblement nulle, on peut aussi prévoir une différence de hauteur entre elles qui existe mais de préférence inférieure à 0,3mm, que la pièce mâle soit en saillie ou soit rentrée par rapport à la pièce femelle. Un tel agencement avec une différence de hauteur très faible, voire nulle, permet d'une part, de favoriser le soudage des deux pièces mâle et femelle entre elles et d'autre part, la soudure ultérieure de la connectique externe à l'accumulateur.

## Revendications

1. Accumulateur électrochimique (1) au lithium comportant:
- au moins une cellule électrochimique constituée d'au moins une anode et une cathode de part et d'autre d'un séparateur imprégné d'électrolyte imprégné, la ou les cellule(s) définissant un faisceau électrochimique (5) de forme allongée selon un axe longitudinal avec à l'une de ses extrémités latérales, des bandes de l'anode non revêtues et à l'autre de ses extrémités latérales des bandes de la cathode non revêtues; au moins une partie des bandes non revêtues de l'anode ou de la cathode du faisceau électrochimique (5) étant tassée en formant un socle (51) ;
- un boîtier (6) agencé pour contenir de manière étanche le faisceau électrochimique,
- deux bornes (2,4) de sortie courant reliées chacune à l'une ou l'autre de l'au moins une anode et de l'au moins une cathode, une des bornes dite première borne (2) traversant une paroi du boîtier (6) et étant isolée électriquement de celui-ci,
**caractérisé en ce que** la première borne (2) comporte une première pièce (21) conductrice traversant le boîtier (6) et comportant une portion (25) dont au moins une zone (24) est directement soudée sur le socle (51).

2. Accumulateur électrochimique selon la revendication 1, la deuxième borne (4) étant soudée au boîtier (6).

3. Accumulateur électrochimique selon la revendication 1 ou 2, la première borne (2) comportant une deuxième pièce conductrice (22) de type femelle, la première pièce (21) étant de type mâle,
l'accumulateur comportant deux joints (31, 32) électriquement isolants sous la forme de rondelles, comportant chacune une portion d'appui (33, 34) en appui surfacique avec pression contre l'une des faces de la paroi du boitier et une portion de guidage (35, 36) en saillie par rapport à la portion d'appui, la portion de guidage étant en appui avec pression contre un bord de l'orifice traversant de la paroi,
la pièce mâle (21) étant ajustée serrée dans la pièce femelle (22), chacune des pièces conductrices comportant une portion d'appui en appui surfacique avec pression contre la portion d'appui des rondelles, la pièce femelle étant en outre en appui surfacique avec pression contre les portions de guidage des rondelles,

4. Accumulateur selon la revendication 3, les pièces mâle (21) et femelle (22) étant soudées entre elles par un cordon de soudure continu (28).

5. Accumulateur selon l'une des revendications précédentes, la portion (25) étant soudée au socle (51) par une zone de moindre épaisseur (24) de la première pièce (21), l'épaisseur e de ladite zone (24) étant moindre que l'épaisseur de la portion (25) en-dehors de la zone de moindre épaisseur, l'épaisseur e étant de préférence comprise entre 0,1 et 0,8mm, et la largeur 1 de la zone de moindre épaisseur étant de préférence comprise entre 0,3 et 2mm.

6. Accumulateur selon la revendication 5, la zone de moindre épaisseur (24) étant une zone périphérique extérieure de la première pièce (21).

7. Accumulateur selon la revendication 5, la zone de moindre épaisseur (24) étant une gorge périphérique de forme annulaire.

8. Accumulateur selon l'une des revendications précédentes, la portion (25) étant soudée sur le socle (51) par transparence laser.

9. Accumulateur selon l'une des revendications précédentes, les bornes étant en cuivre ou en cuivre nickelé.

10. Accumulateur selon l'une des revendications précédentes, les bandes non revêtue (53) d'une même électrode étant reliées entre elles par au moins une soudure (54) radiale à l'axe du faisceau électrochimique.

11. Accumulateur selon l'une des revendications précédentes, le faisceau électrochimique (5) étant obtenu par enroulement, la première borne (2) étant soudée sur l'axe d'enroulement du faisceau électrochimique (5).

12. Accumulateur selon l'une des revendications 1 à 10, le faisceau électrochimique (5) étant obtenu par enroulement, la borne (2) étant soudée à mi-distance entre l'axe d'enroulement du faisceau électrochimique (5) et la périphérie extérieure du faisceau électrochimique (5).

13. Accumulateur selon l'une des revendications précédentes, les matériaux et les dimensions des différentes pièces conductrices étant choisis pour permettre le passage d'un courant d'intensité égale ou supérieure à 250A.

14. Procédé de réalisation d'un accumulateur électrochimique selon l'une des revendications précédentes, selon lequel on réalise les étapes suivantes:
a. tassement axial selon l'axe du faisceau électrochimique (5) d'au moins une partie des bandes non revêtues (53) d'une même électrode du faisceau électrochimique (5) pour créer le socle (51),
b. positionnement de la première pièce (21) conductrice de la première borne (2) directement sur le socle (51),
c. soudage de la première pièce (21) directement au socle (51).

15. Procédé selon la revendication 14, comportant en outre les étapes suivantes :
d. positionnement de deux joints isolants électriquement (31,32) sous la forme de rondelles de part et d'autre d'un orifice traversant la paroi (62) du boitier (6),
e. positionnement de la deuxième pièce (22) de la première borne au travers des orifices des rondelles (31,32) et de l'orifice traversant de la paroi du boitier (6),
f. emmanchement en force de l'ensemble constitué par la paroi (62), la deuxième pièce (22) et les rondelles (31, 32) sur la première pièce (21).
g. sertissage de la première borne (2) par appui surfacique sur la surface supérieure (27) de la deuxième pièce (22) jusqu'à obtenir l'alignement de cette surface supérieure (27) avec la surface supérieure (23) de la première pièce (21) traversant le boîtier (6) et la mise en compression axiale et radiale des rondelles (31, 32),
h. réalisation d'un cordon de soudure continu (28) entre la première pièce (21) et la deuxième pièce (22).

## Patentansprüche

1. Elektrochemischer Lithium-Akkumulator (1), umfassend:
- mindestens eine elektrochemische Zelle, die aus mindestens einer Anode und einer Kathode beidseits eines mit einem imprägnierten Elektrolyten imprägnierten Separators besteht, wobei die Zelle(n) ein elektrochemisches Bündel (5) mit entlang einer Längsachse langgestreckter Form definieren mit nicht beschichten Streifen der Anode an einem seiner seitlichen Enden und nicht beschichteten Streifen der Kathode an dem anderen seiner seitlichen Enden; wobei mindestens ein Teil der nicht beschichteten Streifen der Anode oder der Kathode des elektrochemischen Bündels (5) zusammengedrückt ist und dabei einen Sockel (51) bildet;
- ein Gehäuse (6), das dazu gestaltet ist, das elektrochemische Bündel dicht zu enthalten,
- zwei Stromausgangspole (2, 4), die jeweils mit der einen oder der anderen der mindestens einen Anode und der mindestens einen Kathode verbunden sind, wobei einer der Pole, erster Pol (2) genannt, durch eine Wand des Gehäuses (6) geführt ist und von diesem elektrisch isoliert ist,
**dadurch gekennzeichnet, dass** der erste Pol (2) ein erstes leitendes Teil (21) umfasst, das durch das Gehäuse (6) geführt ist und einen Abschnitt (25) umfasst, von dem mindestens ein Bereich (24) direkt auf den Sockel (51) geschweißt ist.

2. Elektrochemischer Akkumulator nach Anspruch 1, wobei der zweite Pol (4) an das Gehäuse (6) geschweißt ist.

3. Elektrochemischer Akkumulator nach Anspruch 1 oder 2, wobei der erste Pol (2) ein zweites leitendes Teil (22) vom Aufnahmetyp umfasst, wobei das erste Teil (21) vom Stecktyp ist,
wobei der Akkumulator zwei elektrisch isolierende Dichtungen (31, 32) in Form von Scheiben umfasst, die jeweils einen Anlageabschnitt (33, 34) umfassen, der flächig mit Druck an einer der Seiten der Wand des Gehäuses anliegt, und einen Führungsabschnitt (35, 36), der in Bezug auf den Anlageabschnitt abragt, wobei der Führungsabschnitt mit Druck an einem Rand der Durchgangsöffnung der Wand anliegt, wobei das Steckteil (21) in das Aufnahmeteil (22) pressgepasst ist, wobei jedes der leitenden Teile einen Anlageabschnitt umfasst, der flächig mit Druck an dem Anlageabschnitt der Scheiben anliegt, wobei das Aufnahmeteil ferner flächig mit Druck an den Führungsabschnitten der Scheiben anliegt.

4. Akkumulator nach Anspruch 3, wobei das Steckteil (21) und das Aufnahmeteil (22) mit einer durchgehenden Schweißnaht (28) zusammengeschweißt sind.

5. Akkumulator nach einem der vorhergehenden Ansprüche, wobei der Abschnitt (25) an den Sockel (51) über einen Bereich von geringerer Dicke (24) des ersten Teils (21) geschweißt ist, wobei die Dicke e des Bereichs (24) geringer als die Dicke des Abschnitts (25) außerhalb des Bereichs von geringerer Dicke ist, wobei die Dicke e bevorzugt zwischen 0,1 und 0,8 mm beträgt und die Breite 1 des Bereichs von geringerer Dicke bevorzugt zwischen 0,3 und 2 mm beträgt.

6. Akkumulator nach Anspruch 5, wobei der Bereich von geringerer Dicke (24) ein äußerer Umfangsbereich des ersten Teils (21) ist.

7. Akkumulator nach Anspruch 5, wobei der Bereich von geringerer Dicke (24) eine ringförmige Umfangsnut ist.

8. Akkumulator nach einem der vorhergehenden Ansprüche, wobei der Abschnitt (25) durch Laserdurchstrahlschweißen auf den Sockel (51) geschweißt ist.

9. Akkumulator nach einem der vorhergehenden Ansprüche, wobei die Pole aus Kupfer oder aus vernickeltem Kupfer sind.

10. Akkumulator nach einem der vorhergehenden Ansprüche, wobei die nicht beschichteten Streifen (53) derselben Elektrode durch mindestens eine radial zur Achse des elektrochemischen Bündels verlaufende Schweißnaht (54) untereinander verbunden sind.

11. Akkumulator nach einem der vorhergehenden Ansprüche, wobei das elektromechanische Bündel (5) durch Wickeln erhalten wird, wobei der erste Pol (2) auf die Wickelachse des elektrochemischen Bündels (5) geschweißt wird.

12. Akkumulator nach einem der Ansprüche 1 bis 10, wobei das elektromechanische Bündel (5) durch Wickeln erhalten wird, wobei der Pol (2) auf halbem Abstand zwischen der Wickelachse des elektrochemischen Bündels (5) und dem Außenumfang des elektrochemischen Bündels (5) geschweißt wird.

13. Akkumulator nach einem der vorhergehenden Ansprüche, wobei die Werkstoffe und die Abmessungen der verschiedenen leitenden Teile so gewählt sind, dass der Durchgang eines Stroms mit einer Stärke von 250 A oder mehr ermöglicht wird.

14. Verfahren zur Herstellung eines elektrochemischen Akkumulators nach einem der vorhergehenden Ansprüche, gemäß dem die folgenden Schritte ausgeführt werden:
a. axiales Zusammendrücken mindestens eines Teils der nicht beschichteten Streifen (53) derselben Elektrode des elektrochemischen Sockels (5)entlang der Achse des elektrochemischen Bündels (5), um den Sockel (51) zu erzeugen,
b. Positionieren des ersten leitenden Teils (21) des ersten Pols (2) direkt auf dem Sockel (51),
c. Schweißen des ersten Teils (21) direkt an den Sockel (51).

15. Verfahren nach Anspruch 14, das ferner die folgenden Schritte umfasst:
d. Positionieren von zwei elektrisch isolierenden Dichtungen (31, 32) in Form von Scheiben beidseits einer Durchgangsöffnung der Wand (62) des Gehäuses (6),
e. Positionieren des zweiten Teils (22) des ersten Pols durch die Öffnungen der Scheiben (31, 32) und die Durchgangsöffnung der Wand des Gehäuses (6) hindurch,
f. Aufpressen der aus der Wand (62), dem zweiten Teil (22) und den Scheiben (31, 32) bestehenden Anordnung auf das erste Teil (21),
g. Einpassen des ersten Pols (2) durch flächiges Drücken auf die obere Fläche (27) des zweiten Teils (22) bis das Fluchten dieser oberen Fläche (27) mit der oberen Fläche (23) des durch das Gehäuse (6) geführten ersten Teils (21) und das axiale und radiale Komprimieren der Scheiben (31, 32) erhalten wird,
h. Ausführen einer durchgehenden Schweißnaht (28) zwischen dem ersten Teil (21) und dem zweiten Teil (22) .

## Claims

1. A lithium electrochemical accumulator (1) including:
- at least one electrochemical cell made up of a least an anode and a cathode on either side of a separator impregnated with an electrolyte impregnated, the cell(s) defining an electrochemical assembly (5) having an elongated shape along a longitudinal axis with, at one of the lateral ends thereof, uncoated strips of the anode and, at the other of the lateral ends thereof, uncoated strips of the cathode; at least some of the uncoated strips of the anode or of the cathode of the electrochemical assembly (5) being packed together while forming a base (51);
- a housing (6) arranged to contain, in a sealed manner, the electrochemical assembly,
- two current output terminals (2, 4) each connected to either of the at least one anode or of the at least one cathode, one of the terminals called the first terminal (2) passing through a wall of the housing (6) and being electrically insulated therefrom,
**characterized in that** the first terminal (2) includes a first conducting piece (21) passing through the housing (6) and including a portion (25), at least one area (24) of which is directly welded on the base (51).

2. The electrochemical accumulator as claimed in claim 1, the second terminal (4) being welded to the housing (6).

3. The electrochemical accumulator as claimed in claim 1 or 2, the first terminal (2) including a female second conducting piece (22), the first piece (21) being male,
the accumulator including two electrically insulating joints (31, 32) in the form of washers, each including a bearing portion (33, 34) surface-bearing with pressure against one of the faces of the wall of the housing and a guide portion (35, 36) projecting with respect to the bearing portion, the guide portion bearing with pressure against a rim of the through-hole of the wall,
the male piece (21) being press-fitted into the female piece (22), each of the conducting pieces including a bearing portion surface-bearing with pressure against the bearing portion of the washers, the female piece furthermore surface-bearing with pressure against the guide portions of the washers.

4. The accumulator as claimed in claim 3, the male (21) and female (22) pieces being welded together by a weld continuous seam (28).

5. The accumulator as claimed in one of the preceding claims, the portion (25) being welded to the base (51) by an area of lesser thickness (24) of the first piece (21), the thickness e of said area (24) being smaller than the thickness of the portion (25) outside the area of lesser thickness, the thickness e being preferably between 0.1 and 0.8 mm, and the width 1 of the area of lesser thickness being preferably between 0.3 and 2 mm.

6. The accumulator as claimed in claim 5, the area of lesser thickness (24) being an outer peripheral area of the first piece (21).

7. The accumulator as claimed in claim 5, the area of lesser thickness (24) being an annular peripheral recess.

8. The accumulator as claimed in one of the preceding claims, the portion (25) being welded onto the base (51) by laser transmission.

9. The accumulator as claimed in one of the preceding claims, the terminals being made of copper or nickel-plated copper.

10. The accumulator as claimed in one of the preceding claims, the uncoated strips (53) of a same electrode being connected to each other by at least a weld (54) radial to the axis of the electrochemical assembly.

11. The accumulator as claimed in one of the preceding claims, the electrochemical assembly (5) being obtained by winding, the first terminal (2) being welded on the winding axis of the electrochemical assembly (5).

12. The accumulator as claimed in one of claims 1-10, the electrochemical assembly (5) being obtained by winding, the terminal (2) being welded midway between the winding axis of the electrochemical assembly (5) and the outer periphery of the electrochemical assembly (5).

13. The accumulator as claimed in one of the preceding claims, the materials and the dimensions of the various conducting pieces being chosen to allow the flow of a current having an intensity equal to or greater than 250A.

14. A method of producing an electrochemical accumulator as claimed in one of the preceding claims, according to which the following steps are carried out:
a. axially packing together, along the axis of the electrochemical assembly (5), at least some of the uncoated strips (53) of a same electrode of the electrochemical assembly (5) in order to create the base (51),
b. positioning the first conducting piece (21) of the first terminal (2) directly on the base (51),
c. welding the first piece (21) directly to the base (51).

15. The method as claimed in claim 14, further including the following steps:
d. positioning two electrically insulating joints (31, 32) in the form of washers on either side of a hole passing through the wall (62) of the housing (6),
e. positioning the second piece (22) of the first terminal through the holes of the washers (31, 32) and the through-hole of the wall of the housing (6),
f. force-fitting the unit made up of the wall (62), the second piece (22) and the washers (31, 32) on the first piece (21),
g. crimping the first terminal (2) by surface-bearing on the upper surface (27) of the second piece (22) until this upper surface (27) is aligned with the upper surface (23) of the first piece (21) passing through the housing (6) and the washers (31, 32) are axially and radially compressed,
h. producing a weld continuous seam (28) between the first piece (21) and the second piece (22).
